# EUROPÄISCHE PATENTSCHRIFT

(11) **EP 2 410 938 B1**
(45) Veröffentlichungstag und Bekanntmachung des Hinweises auf die Patenterteilung: **02.10.2019**
(21) Anmeldenummer: 10709750.3
(22) Anmeldetag: 23.03.2010
(51) Int. Cl.: A61C 8/00

(54) **SCANKÖRPER FÜR ZAHNIMPLANTATE**
SCANNING BODY FOR TOOTH IMPLANTS
CORPS DE BALAYAGE POUR IMPLANTS DENTAIRES

(30) Priorität: 23.03.2009 DE 102009014013
(43) Veröffentlichungstag der Anmeldung: 01.02.2012
(60) Teilanmeldung: 19194451.1
(73) Patentinhaber: BEGO Implant Systems GmbH & Co. KG, 28359 Bremen (DE)
(72) Erfinder: HUNENBART, Stefan, Bremen 28355 (DE); MEYER, Stephan, Weyhe 28844 (DE)
(74) Vertreter: Eisenführ Speiser
(86) Internationale Anmeldenummer: PCT/EP2010/053777
(87) Internationale Veröffentlichungsnummer: WO 2010/108919

(56) Entgegenhaltungen:
- EP-A1- 1 618 854
- DE-A1-102006 052 419
- US-A- 4 758 161
- US-A1- 2002 039 717
- US-A1- 2004 101 808
- US-A1- 2008 002 869
- US-B1- 6 524 106

## Beschreibung

Die Erfindung betrifft einen Erfassungshilfskörper zur geometrischen Erfassung der Implantationslage und Ausrichtung eines Zahnimplantats, umfassend: einen Aufnahmeabschnitt, mittels dem der Erfassungskörper einem Zahnimplantat in geometrisch definierter Weise zugeordnet werden kann, einen mit dem Aufnahmeabschnitt verbundenen Erfassungsabschnitt, welcher ausgebildet ist, um von einer berührungslosen Bilderfassungsvorrichtung erfasst zu werden. Ein weiterer Aspekt der Erfindung ist ein Verfahren zur Erfassung der Lage der Implantatschnittstelle und des Ortes eines Zahnimplantats.

In der modernen Zahnimplantologie besteht eine wesentliche Voraussetzung für den Erfolg eines Zahnimplantates, d.h. insbesondere dessen gute Funktionalität und langfristige Verankerung, darin, dass der zu ersetzende Zahn/Aufbau solcherart platziert und gestaltet, ausgerichtet und ausmodelliert wird, dass er in idealer Weise mit den benachbarten Zähnen und dem Antagonisten zusammenwirken kann und Kräfte auf Implantat und Knochen überträgt. Sowohl bei dem Implantationsvorgang des im Knochen verankerten Implantatteils als auch bei der späteren Rekonstruktion des sichtbaren Anteils des Zahnes ist es zu diesem Zweck erforderlich, die Lage und Ausrichtung des Implantates exakt bestimmen zu können, um einerseits die Implantatlage im Mundraum den tatsächlichen anatomischen Verhältnissen exakt anzupassen und zu kennen als auch andererseits die an dem Modell bestehende Geometrie den tatsächlichen anatomischen Verhältnissen exakt anpassen zu können. Diese Vorgänge werden dadurch erschwert, dass das Zahnimplantat selbst praktisch vollständig im Kieferknochen versenkt ist und sich daher einer direkten Erfassung hinsichtlich Lage und Ausrichtung faktisch entzieht und es immer individuelle Lösungen gibt.

Es ist bekannt, sich zur Erfassung der Lage und Ausrichtung eines Implantats eines Erfassungshilfskörpers zu bedienen, der mit dem Implantat verbunden wird, beispielsweise darin eingeschraubt wird, und an diesem Erfassungshilfskörper einen mit einer Abtastvorrichtung erfassbaren Kopfbereich mit tastbaren Kanten oder Ecken als Erfassungsabschnitt bereitzustellen, die als Referenzpunkte dienen. Anhand der bekannten Geometrie des abtastbaren Erfassungsabschnitts und dem mit dem Implantat verbundenen Aufnahmeabschnitt kann dann, wenn weiterhin die Geometrie des Zahnimplantats bekannt ist, dessen Lage und Ausrichtung anhand der zuvor erfassten Daten des Erfassungsabschnitts berechnet werden. Dies erfolgt in der Regel durch Umsetzung der durch Abtastung/berührungslose Bilderfassung erfassten Daten mittels Triangulation in eine Darstellung des Erfassungshilfskörpers und entsprechende Weiterberechnung des solcherart dargestellten Erfassungshilfskörpers in seinem mit dem Implantat verbundenen Zustand.

Nachteilig an dieser Vorgehensweise ist, dass häufig eine nicht ausreichende Genauigkeit bei der Bestimmung der Lage und Ausrichtung des Erfassungshilfskörpers erreicht wird und sich Genauigkeitsfehler dieser Art in verstärktem Ausmaß auf die Genauigkeit der Bestimmung der Lage und Ausrichtung des Implantats auswirken. Die Erfassung und Berechnung der Lage und Ausrichtung eines Erfassungshilfskörpers und Implantats nach dem Stand der Technik weist daher Ungenauigkeiten auf, die zu einer unzulänglichen Präzision bei der Platzierung/Dimensionierung und Anfertigung des Zahnersatzes führen können, was die Funktionalität und Langzeitverankerung des Zahnimplantats und des Zahnersatzes beeinträchtigen kann.

Aus US 2008/0002869 A1 ist ein Verfahren und System zur Bestimmung der relativen Lage und Orientierung von Objekten in einer Mehrzahl von aufgenommenen Bildern bekannt. Aus DE 10 2006 052 419 A1 ist ein Verfahren zum Erfassen von Implantaten in einem Kiefer oder einer Implantatabformung bekannt. Die Erfindung betrifft auch einen Messkörper zum Einsetzen in ein Implantat und/oder eine Abformung davon in Kombination mit einem Datensatz. Aus US 2002/0039717 A1 ist eine Heilkappe zur Anbringung an ein Dentalimplantat bekannt.

Der Erfindung liegt das Ziel zugrunde, die Genauigkeit der Bestimmung der Lage und der Ausrichtung eines Zahnimplantates zu verbessern.

Diese Aufgabe wird erfindungsgemäß durch einen Erfassungshilfskörper gemäß Anspruch 1 sowie einem Verfahren gemäß Anspruch 9 gelöst.

Erfindungsgemäß wird eine erste plane Erfassungsfläche und eine weitere, gekrümmte Erfassungsfläche am Erfassungsabschnitt des Erfassungshilfskörpers bereitgestellt und diese beiden Erfassungsflächen dienen dazu, die Implantationsausrichtung und -lage eines Zahnimplantats exakt zu bestimmen. Erfindungsgemäß wird folglich davon abgesehen, Kanten, Ecken oder sonstige markante Punkte eines Erfassungshilfskörpers abzutasten und stattdessen auf zwei in bestimmter Lage zueinander ausgerichtete Flächen bei der Abtastung abgestellt. Die erste plane Erfassungsfläche ist hierbei seitlich an dem Erfassungsabschnitt als Wandfläche ausgebildet, die weitere, gekrümmte Erfassungsfläche ist vorzugsweise am stirnseitigen, also koronalen Ende des Erfassungshilfskörpers ausgebildet und weist somit sowohl Flächenanteile auf, die senkrecht in einer ersten Richtung zur ersten planen Erfassungsfläche liegen als auch senkrecht in einer zweiten Richtung zur ersten planen Erfassungsfläche liegen, wodurch eine einerseits eindeutige Referenzierung in theoretischer Hinsicht als auch eine ausreichend hohe Anzahl an Abtastpunkten und somit eine präzise Referenzierung in praktischer Hinsicht erreichbar wird. Die Erfindung beruht hierbei auf der Erkenntnis, dass zwar Kanten und Ecken eines Erfassungshilfskörpers im Zuge der Abtastung markante Punkte darstellen, die so bei der Abtastung erreichte Genauigkeit aber bei der späteren Triangulation oftmals verloren geht, da Kanten und Ecken bei der Triangulation stets in gewisser Weise angenähert werden müssen und nicht scharf abgebildet werden können. Dieser Nachteil tritt nicht auf, wenn Flächen, insbesondere plane oder leicht gekrümmte Flächen abgetastet und mit einer Triangulation umgesetzt werden, da solche Flächen auch bei einer Triangulation in hohem Maße kongruent zum tatsächlich abgetasteten Bild umgesetzt werden können. Der erfindungsgemäße Erfassungshilfskörper ermöglicht daher eine erheblich präzisere Bestimmung der Lage und des Ortes eines Implantats als Erfassungshilfskörper nach dem Stand der Technik.

Gemäß einer ersten bevorzugten Ausführungsform ist vorgesehen, dass der Aufnahmeabschnitt als nicht-zylindrische Fläche ausgebildet ist, insbesondere als Mehrkantfläche. Mit einem solcherart ausgebildeten Aufnahmeabschnitt kann der Erfassungshilfskörper rotationsgesichert, insbesondere in einer definierten Rotationswinkellage um die Mittellängsachse mit dem Implantat verbunden werden und ermöglicht daher in sicherer Weise eine reproduzierbare Verbindung zwischen dem Erfassungshilfskörper und dem Implantat. Insbesondere können hierbei solche nicht-zylindrischen Flächen ausgeführt werden, die nur in einer einzigen definierten Rotationswinkellage eine Zusammenfügung von Implantat und Erfassungshilfskörper erlauben, beispielsweise gleichschenklige Dreiecksquerschnitte, asymmetrische Trapezquerschnitte. In bestimmten Ausgestaltungen können aber auch andere Ausgestaltungen des Aufnahmeabschnitts, beispielsweise quadratische Vierkantabschnitte oder regelmäßige Sechskantabschnitte eingesetzt werden.

Erfindungsgemäß ist der Erfassungsabschnitt als zylindrischer Grundkörper ausgebildet, dessen Mittellängsachse der Erstreckungsrichtung des Erfassungsabschnitts entspricht und in dessen Außenfläche die erste plane Erfassungsfläche als sich im Querschnitt als Sekante darstellende Fläche ausgebildet ist und an deren stirnseitigem Ende eine zweite Erfassungsfläche ausgebildet ist. Diese Ausgestaltung hat sich als einerseits besonders präzise in der Fertigung des Erfassungshilfskörpers erwiesen und ermöglicht andererseits eine schnelle und sichere Abtastung. Durch die stirnseitige Anordnung der gekrümmten Erfassungsfläche wird zudem aufgrund des erreichten hohen Abstands zum Implantat ein Winkelfehler hinsichtlich der Genauigkeit der Implantationslage in idealer Weise minimiert.

Weiterhin weist der Erfassungsabschnitt eine zweite plane Erfassungsfläche auf, deren Flächennormale senkrecht zur Erstreckungsrichtung des Erfassungsabschnitts liegt und die in Bezug auf einen Querschnitt senkrecht zur Erstreckungsrichtung des Erfassungsabschnitts in einem anderen Winkelbereich um die Erstreckungsachse des Erfassungsabschnitts als die erste plane Erfassungsfläche angeordnet ist. Durch eine solche zweite plane Erfassungsfläche kann die Genauigkeit der Abtastung weiter erhöht werden, da zwei plane Referenzflächen in einer zueinander bekannten Lage am erfindungsgemäßen Erfassungshilfskörper bereitgestellt und deren abgetastete Lage zueinander korreliert werden können.

Dabei ist es besonders bevorzugt, wenn die zweite plane Erfassungsfläche rotationssymmetrisch gegenüberliegend zur ersten planen Erfassungsfläche angeordnet ist. Bei dieser weiteren Fortbildung liegen die beiden planen Erfassungsflächen in einem Winkel von 180° zueinander. Diese Anordnung hat einen spezifischen Vorteil, der sich aus der typischerweise durch spanende Bearbeitung eines Drehkörpers erfolgenden Herstellung des Erfassungshilfskörpers ergibt. Da eine kritische Fertigungsgröße bei dieser Art der Herstellung die radiale Tiefe ist, in welcher die plane Erfassungsfläche durch einen Fräsvorgang gesetzt wird, kann durch Fräsung der beiden planen Erfassungsflächen mit ein und derselben Werkzeugeinstellung eine Fertigungstoleranz vollständig ausgeglichen werden, da eine Abweichung der radialen Anordnung der Fläche sich bei beiden Flächen in gleicher Weise auswirken würde und daher die Bestimmung der Mittellängsachse in unveränderter Präzision unter Bezugnahme auf die beiden gegenüberliegenden Erfassungsflächen erfolgen kann.

Noch weiter ist vorgesehen, dass der erfindungsgemäße Erfassungshilfskörper fortgebildet wird durch einen sich durch den Erfassungsabschnitt und den Aufnahmeabschnitt erstreckenden Kanal zur Aufnahme einer Schraube zur Befestigung des Erfassungshilfskörpers an einem Implantat. Ein solcher Kanal, der gegebenenfalls mit einem Absatz, der als Widerlager für einen Schraubenkopf dienen kann, ausgebildet sein kann, ermöglicht eine sichere Befestigung des Erfassungshilfskörpers an dem Implantat. Insbesondere kann in einem solchen Fall die gekrümmte Erfassungsfläche ringförmig um die koronale Öffnung des Kanals angeordnet sein.

Schließlich wird nach einer weiteren bevorzugten Ausführungsform der erfindungsgemäße Erfassungshilfskörper fortgebildet durch einen als Mehrkantfläche, insbesondere als Sechskantfläche ausgebildeten Aufnahmeabschnitt, an den sich nach koronal ein um eine Mittellängsachse rotationssymmetrischer, sich konisch erweiternder Abschnitt anschließt, an den sich nach koronal ein um die Mittellängsachse rotationssymmetrischer zylindrischer Abschnitt anschließt, in dem, beabstandet vom Übergang zwischen dem konischen und dem zylindrischen Abschnitt die erste und eine zweite plane Erfassungsfläche ausgebildet sind, die gegenüberliegend zueinander angeordnet sind und deren Flächennormale senkrecht zur Mittellängsachse liegt, wobei die erste und zweite Erfassungsfläche in ihrem nach apikal weisenden Endbereich in verrundeter Weise in den zylindrischen Abschnitt übergehen, und eine als ringförmiger Abschnitt am koronalen Ende ausgebildete gekrümmte Erfassungsfläche, die eine Öffnung zur Einführung einer Schraube zur Befestigung des Erfassungshilfskörpers an einem Implantat umringt und die als verrundete Übergangsfläche zwischen dem zylindrischen Abschnitt und dem koronalen Ende ausgebildet ist.

Diese Art des Aufbaus hat sich als einerseits besonders unempfindlich gegenüber Fertigungstoleranzen erwiesen, die bei der Herstellung des Erfassungshilfskörpers auftreten und ermöglicht andererseits eine gute Erfassung der für die Weiterverarbeitung relevanten Flächen und andererseits eine sichere rechnerische Weiterverarbeitung der so gewonnenen Daten.

Ein weiterer Aspekt der Erfindung ist ein Erfassungshilfskörper nach der vorhergehenden oder eingangs beschriebenen Bauweise, mit einem Zahnaufbauteil, das einen Schraubenaufnahmekanal aufweist, in dem eine Schraube zur Befestigung des Aufbauteils an einem Implantat angeordnet werden kann, welches dadurch fortgebildet ist, dass der Erfassungsabschnitt des Erfassungshilfskörpers eine Außenkontur aufweist, welche zumindest teilweise, vorzugsweise vollständig der Innengeometrie des Schraubenaufnahmekanals des Aufbauteils entspricht. Dieser Aspekt der Erfindung ermöglicht neben einer präzisen Bestimmung der Implantationslage und des Implantationsortes zugleich eine unmittelbar aus den Abtastdaten und den daraus rekonstruierten Abtastflächen erzielbare Darstellung der Lage der Bohrung eines Implantataufbaus. Für den Zahntechniker ist die Lage dieser Bohrung bei der Anfertigung des Zahnersatzes von erheblicher Bedeutung, da die Bohrung bei der individuellen Anpassung des Zahnersatzes möglichst allseitig mit ausreichender Wandstärke umgeben sein sollte, um die Festigkeit des Zahnersatzes zu gewährleisten. Der solcherart fortgebildete Erfassungshilfskörper des Implantatsystems ermöglicht gegenüber Vorgehensweisen, bei denen diese Bohrung indirekt hinsichtlich ihrer Lage und Ausrichtung berechnet werden muss, Vorteile in der Genauigkeit der Bestimmung der Lage, da Berechnungsschritte, die ansonsten erforderlich wären, entfallen können. Dem Zahntechniker wird daher in direkter Weise die für die weitere Bearbeitung des Zahnersatzes relevante Geometrie der Bohrung bereitgestellt.

Das erfindungsgemäße Zahnaufbauteil mit zugehörigem Erfassungshilfskörper kann dadurch fortgebildet werden, dass der Aufnahmeabschnitt als Außengewinde ausgebildet ist. Diese Ausgestaltung hat sich einerseits als besonders präzise bei der Fertigung des Erfassungshilfskörpers erwiesen, da dieser als rotationssymmetrisches Bauteil ausgeführt werden kann. Andererseits ist die durch ein Außengewinde in der Regel unbestimmt bleibende Winkellage um die Mittellängsachse bei der Befestigung am Implantat aufgrund der Ausgestaltung des Erfassungsabschnitts als vorzugsweise rotationssymmetrischer Schraubenaufnahmekanal für das erfindungsgemäße Implantatsystem keine Beeinträchtigung bei der Rekonstruktion der Implantatlage und des Implantatortes.

Noch weiter ist es bevorzugt, wenn zwischen Aufnahmeabschnitt und Erfassungsabschnitt ein nicht rotationssymmetrischer Verdrehsicherungsbereich angeordnet ist. Mit einem solchen Verdrehsicherungsbereich wird einerseits eine unverwechselbare Lagebestimmung des Erfassungshilfskörpers in Bezug auf die Winkelposition um die Mittellängsachse ermöglicht. Darüber hinaus kann an einem solchen Verdrehsicherungsbereich ein Zahnaufbauteil oder eine modellierte Krone in reproduzierbarer Weise bezüglich seiner Winkellage ausgerichtet werden, wodurch die Bearbeitung und das manuelle Ausprobieren vereinfacht werden kann. Der Verdrehsicherungsbereich kann zu diesem Zweck insbesondere in geometrisch übereinstimmender Weise zu einem entsprechenden Verdrehsicherungsbereich ausgebildet werden, der an einem entsprechenden Zahnaufbauteil ausgebildet ist.

Schließlich ist ein weiterer Aspekt der Erfindung ein Verfahren nach Anspruch 9.

Mit dem solcherart ausgebildeten Verfahren wird ein verbessertes Vorgehen bei der Erfassung der Lage und des Ortes eines Zahnimplantats bereitgestellt, welches insbesondere auf eine erste plane Erfassungsfläche und eine gekrümmte Erfassungsfläche zurückgreift, die abgetastet werden, beispielsweise mittels eines Streifenlichtscanners. Die erste, plane Erfassungsfläche und die gekrümmte Erfassungsfläche sind vorzugsweise voneinander beabstandet. Dies schließt nicht aus, dass die beiden Erfassungsflächen aneinander angrenzen, maßgeblich für die Genauigkeit der Erfassung ist vielmehr, dass beide Erfassungsflächen Flächenanteile aufweisen, die weder kongruent noch direkt aneinander angrenzend sind. Durch Abtasten der planen und der gekrümmten Erfassungsfläche werden Bilddaten erfasst und für die Weiterverarbeitung bereitgestellt, die mit einer besonders geringen Fehlerquote einem Triangulationsverfahren oder einem anderen Verfahren zur Erstellung von einer segmentierten dreidimensionalen Flächendarstellung oder Volumendarstellung zeigen. Hierdurch kann der gesamte Prozess einer Erfassung und rechnerischen Rekonstruktion der Lage und des Ortes eines Implantats auf Basis von an einem Erfassungshilfskörper erfassten geometrischen Daten hinsichtlich seiner Präzision und Fehlersicherheit erheblich verbessert werden.

Das Verfahren kann dadurch weitergebildet werden, dass als gekrümmte Erfassungsfläche eine ringförmig am koronalen Ende des Erfassungshilfskörpers ausgebildete verrundete Fläche abgetastet wird. Die Abtastung einer solcherart angeordneten gekrümmten Erfassungsfläche hat sich als besonders vorteilhaft für die Erzielung einer hohen Genauigkeit erwiesen, da diese Erfassungsfläche aufgrund ihrer Lage einen geringen Winkelfehler bezüglich der Winkelausrichtung des Implantats erzeugt, sofern im Abtastvorgang oder im späteren Umrechnungsvorgang Toleranzen auftreten. Darüber hinaus ist die solcherart angeordnete und ausgebildete gekrümmte Erfassungsfläche in besonders präziser Weise am Erfassungshilfskörper in spanender Bearbeitung zu fertigen. Die gekrümmte Erfassungsfläche stellt in diesem Fall eine Art einer verrundeten Fase dar, die idealerweise sich über einen Verrundungsbereich von 90° erstreckt.

Erfindungsgemäß ist vorgesehen, dass ein Bereich einer zweiten, planen Erfassungsfläche abgetastet wird, die vorzugsweise gegenüberliegend zur ersten Erfassungsfläche angeordnet ist und deren Flächennormale senkrecht zur Mittellängsachse liegt. Durch die Erfassung einer solchen zweiten, planen Erfassungsfläche wird die Genauigkeit des Erfassungs- und Rekonstruktionsvorgangs weiter erhöht. Insbesondere kann dann, wenn die zweite, plane Erfassungsfläche gegenüberliegend zur ersten, planen Erfassungsfläche liegt, also die beiden planen Erfassungsflächen parallel zueinander angeordnet sind, ein etwaiger Fertigungsfehler, der sich in einer im Rahmen der Toleranz abweichenden radialen Tiefenanordnung der beiden planen Erfassungsflächen in symmetrischer Weise ausdrückt, keinen Einfluss auf die exakte Bestimmung der Mittellängsachse des Erfassungshilfskörpers nehmen.

Noch weiter ist es bevorzugt, wenn ein Bereich der ersten, und gegebenenfalls der zweiten planen Erfassungsfläche abgetastet wird, der allseitig zu den Umrisskanten der ersten bzw. zweiten planen Erfassungsfläche einen vorbestimmten Abstand aufweist. Durch die Wahl eines solchen zur Abtastung verwendeten Bereichs der Erfassungsfläche(n) wird ein Ungenauigkeitseffekt vermieden, der daraus resultiert, dass häufig im Bereich von stumpfen oder spitzen Kanten eines Erfassungshilfskörpers Abweichungen bei der Erstellung eines Flächen- oder Volumenmodells mittels Triangulation oder anderer Segmentierungsmethoden auftreten, die insbesondere darin begründet liegen, dass die Abbildung von Kanten mit den geläufigen Umsetzungsverfahren zur Erstellung von Volumen- oder Flächenmodellen aus Abtastdaten nicht mit ausreichender Genauigkeit erfolgt. Das fortgebildete Verfahren vermeidet diese Ungenauigkeiten, indem von solchen Kanten ein Abstand eingehalten wird, der ausreichend ist, dass innerhalb dieses Abstandsbereichs zumindest ein, vorzugsweise zwei oder mehrere Knotenpunkte bei der nachfolgenden Berechnung des Volumen- bzw. Flächenmodells zu liegen kommen. Hierdurch wird gewährleistet, dass der abgetastete Bereich in der nachfolgenden Berechnung als ebener Bereich in das Volumen- bzw. Flächenmodell umgesetzt werden kann, wodurch die Berechnung der Implantatlage und des Implantatortes auf Basis von den tatsächlichen Geometrien entsprechend umgesetzten Abtastdaten erfolgen kann.

Schließlich ist es weiter bevorzugt, wenn das Verfahren der eingangs erwähnten Art oder der zuvor erläuterten Fortbildungen weiter dadurch fortgebildet wird, dass eine Erfassungsfläche abgetastet wird, deren Außengeometrie teilweise, vorzugsweise vollständig der Innengeometrie einer Bohrung eines Aufbauteils entspricht, durch welche eine Schraube zur Befestigung des Aufbauteils an einem Implantat geführt ist. Durch das Abtasten einer solcherart ausgebildeten Erfassungsfläche wird bereits beim Abtastvorgang eine Flächengeometrie erfasst, die für die weitere Bearbeitung des Zahnimplantats von Bedeutung ist, da zu der solcherart hinsichtlich Lage und Ort erfassten Innenbohrung allseitig eine Materialstärke vorhanden sein muss, die eine ausreichende Festigkeit des Implantats gewährleistet. Die Abtastung der der Innengeometrie der Bohrung entsprechenden Außenfläche ermöglicht somit ohne dass geometrische Daten eines Zahnaufbauteils und dessen Befestigung am Implantat in die Berechnung einfließen müssten, eine direkte Darstellung dieser relevanten Bohrungsgeometrie. Durch die Vermeidung der Rechenzwischenschritte, welche ansonsten erforderlich wären, kann die Genauigkeit somit erhöht werden.

Eine bevorzugte Ausführungsform der Erfindung wird anhand der beiliegenden Figuren erläutert. Es zeigen:
Fig. 1 eine perspektivische Ansicht einer ersten Ausführungsform eines erfindungsgemäßen Erfassungshilfskörpers,
Fig. 2 eine Frontalansicht des Erfassungshilfskörpers nach Fig. 1,
Fig. 3 eine Seitenansicht des Erfassungshilfskörpers nach Fig. 1,
Fig. 4 eine geschnittene Frontalansicht des Erfassungshilfskörpers gemäß Fig. 1,
Fig. 5 eine Ansicht von apikal auf den Erfassungshilfskörper nach Fig. 1,
Fig. 6 eine Ansicht von koronal auf den Erfassungshilfskörper nach Fig. 1,
Fig. 7 eine perspektivische Ansicht einer zweiten Ausführungsform , die nicht Gegenstand der Erfindung ist,
Fig. 8 eine Seitenansicht des Erfassungshilfskörpers nach Fig. 7, und
Fig. 9 eine Draufsicht von koronal auf den Erfassungshilfskörper gemäß Fig. 7.

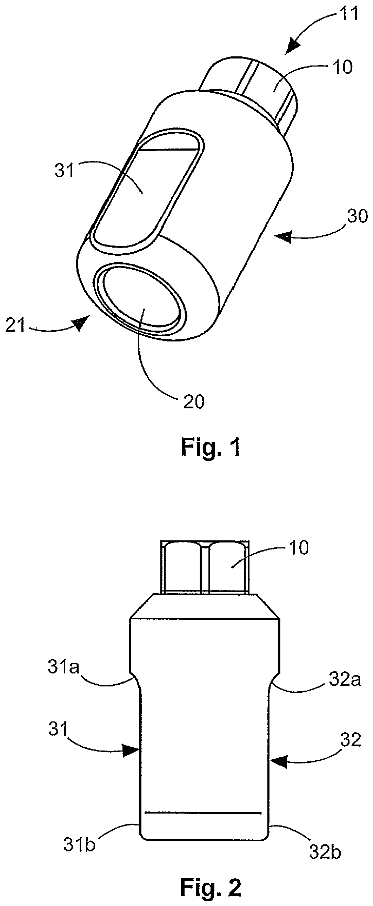

Die Figuren 1 bis 6 zeigen einen Erfassungshilfskörper, oder auch und im Folgenden der Verkürzung halber Scankörper, welcher an einem apikalen Ende 11 einen als Sechskant ausgebildeten Aufnahmeabschnitt 10 aufweist. An dem diesem apikalen Ende gegenüberliegenden koronalen Ende 21 ist eine kreisförmige Öffnung einer zylindrischen Bohrung 20 ausgebildet, die als Aufnahmekanal für eine Schraube dient. Durch diesen Aufnahmekanal kann eine Schraube hindurchgeführt und mit ihrem Schraubenkopf an einem Absatz 22 abgestützt werden, um den Scankörper mit einem Implantat zu verbinden. Der Sechskantabschnitt 10 dient hierbei zur Rotationssicherung und zur Definition der Winkellage des Scankörpers gegenüber dem Implantat um die Längsmittelachse 100 des Scankörpers.

Der Scankörper weist weiterhin einen Erfassungsabschnitt 30 auf, der im Wesentlichen als zylindrischer Grundkörper ausgebildet ist. Der Erfassungsabschnitt weist zwei plane Erfassungsflächen 31, 32 auf, die als gefräste Flächen in die Außenfläche des zylindrischen Grundkörpers eingebracht sind. Die beiden planen Erfassungsflächen 31, 32 sind gegenüberliegend zueinander angeordnet und liegen parallel zueinander.

Der Scankörper weist weiterhin eine gekrümmte Erfassungsfläche 40 auf, die als ringförmige Endfläche am koronalen Ende des Scankörpers angeordnet ist und die koronalseitige Öffnung der Bohrung 20 umgibt.

Zwischen dem Sechskant 10 und dem zylindrischen Grundkörper des Erfassungsabschnitts ist eine sich konisch von apikal nach koronal erweiternde Konusfläche 50 angeordnet, die als Anschlagfläche für den Scankörper in das Implantat dient. Nach koronal anschließend an diese Konusfläche 50 ist ein rotationssymmetrischer zylindrischer Abschnitt 33 angeordnet. Nach koronal an diesem zylindrischen Abschnitt 33 sind die beiden planen Erfassungsflächen 31, 32 mit einem verrundeten Übergang 31a, 32a an dem zylindrischen Grundkörper ausgebildet und laufen plan in die gekrümmte Erfassungsfläche mit Flächenabschnitten 31b, 32b aus.

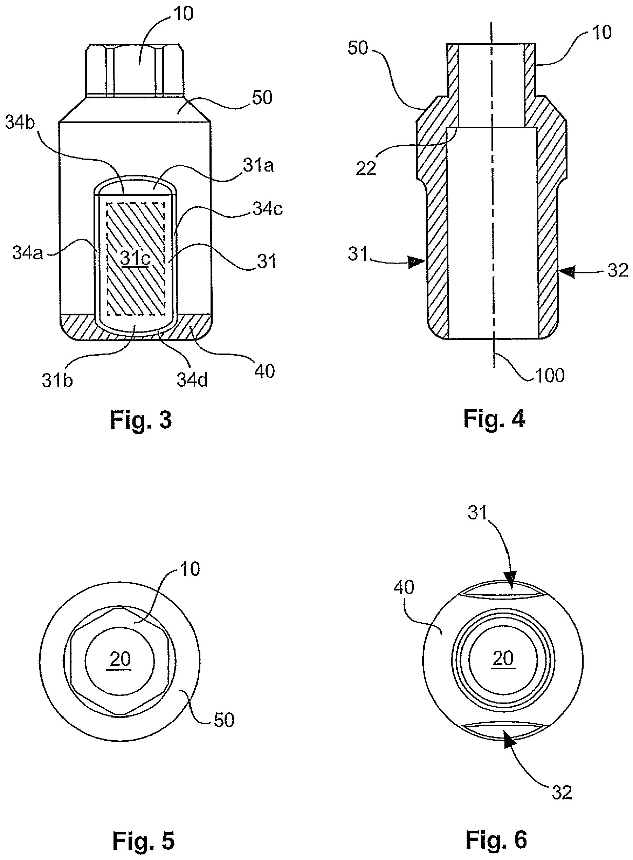

Wie im Detail in Fig. 3 zu erkennen ist, werden lediglich bestimmte Bereiche der ersten und zweiten planen Erfassungsfläche 31, 32 mit dem Abtastverfahren abgetastet, die durch eine unterbrochene Linie umrissen und durch eine Schraffur von links oben nach rechts unten dargestellt sind. Der solcherart definierte Abtastbereich 31c weist einen allseitigen Abstand von den Rändern bzw. Kanten 34a-d auf, der gewährleistet, dass Abtast- oder Umsetzungsfehler, die im Bereich solcher Kanten auftreten, das Abtastergebnis und die nachfolgende Berechnung der Lage des Scankörpers nicht beeinträchtigen.

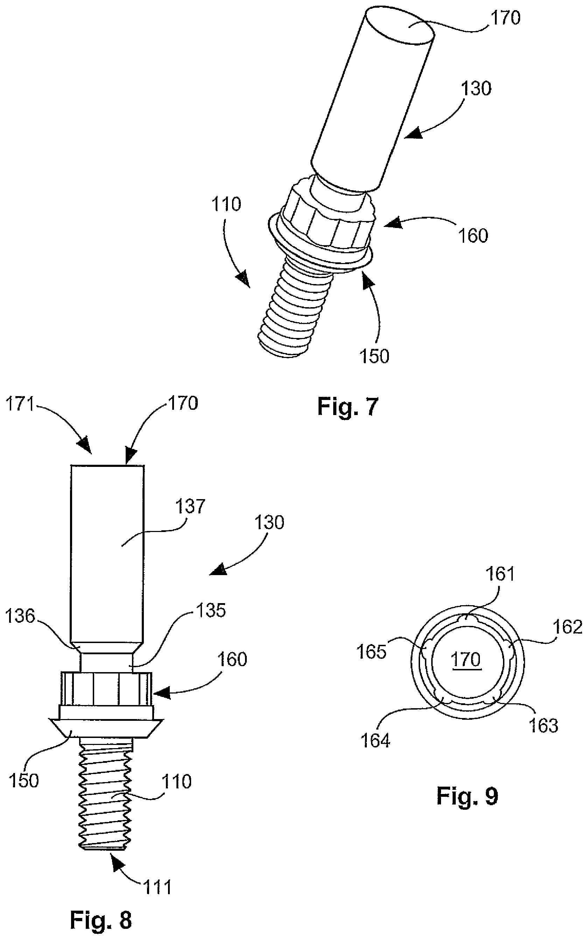

In den Figuren 7 bis 9 ist eine zweite, nicht erfindungsgemäße Ausführungsform abgebildet. Die zweite Ausführungsform weist einen Aufnahmeabschnitt 110 am apikalen Ende 111 auf, der als eingängiges Außengewinde ausgebildet ist. Dieses Außengewinde ist kongruent zu einem entsprechenden Innengewinde in einem Implantat ausgebildet.

An das Außengewinde 110 schließt sich nach koronal ein sich nach koronal erweiternder Konusabschnitt 150 an, der als Anschlagfläche beim Einschrauben des Außengewindes 110 dient.

Koronal von der Konusfläche 150 ist ein als nicht-zylindrische Verdrehsicherung ausgebildeter Abschnitt 160 angeordnet, der, ausgehend von einer zylindrischen Grundfläche, fünf Erhebungen 161-165 aufweist, die gleichmäßig über den Umfang verteilt sind und im Querschnitt einem Kreisflächenabschnitt entsprechen.

Koronal vom Verdrehsicherungsabschnitt 160 ist ein Erfassungsabschnitt 130 angeordnet. Der Erfassungsabschnitt 130 besteht aus einem apikalen Bereich 135, der als zylindrischer Körper ausgebildet ist und an den sich nach koronal konisch erweiternder Abschnitt 136 anschließt. Der sich konisch erweiternde Abschnitt 136 geht in einen wiederum zylindrisch ausgebildeten Abschnitt 137 über, dessen Durchmesser größer ist als der zylindrische Abschnitt 135.

Wie man im Abgleich zu Fig. 4 erkennen kann, entsprechen die Außenflächen der Erfassungsflächen 135, 136 und 137 des Scankörpers gemäß der zweiten Ausführungsform den Innenflächen 23, 24 der Bohrung des Scankörpers der ersten Ausführungsform mit der Ausnahme, dass der Absatz 22 nicht als rechtwinkliger Absatz, sondern als konischer Absatz ausgeführt ist. Die Bohrung 20 mit ihren Abschnitten 23, 24 und dem Absatz 22 entspricht wiederum einer Bohrung, die in einem Zahnaufbauteil ausgebildet ist, um dieses Zahnaufbauteil an ein Implantat mittels einer Schraube zu befestigen, die innerhalb dieser Bohrung angeordnet ist, mit dem Unterschied, dass der Absatz 22 bei einem Zahnaufbauteil als konischer Abschnitt ausgebildet ist, der kongruent zum konischen Abschnitt 136 des Scankörpers der zweiten Ausführungsform ist.

Auf diese Weise bildet die Außenfläche des Erfassungsabschnitts 130, die durch die Erfassungsflächen 135, 136 und 137 gebildet wird, exakt die Geometrie der Innenbohrung eines Zahnaufbauteils nach und erlaubt somit eine direkte Erfassung und Darstellung der Masse dieser Innenbohrung, ohne dass hierfür auf Grundlage von Geometriedaten eines Zahnaufbauteils und Korrelationen von dessen Lage in Bezug auf das Implantat, die wiederum aus der Lage des Scankörpers berechnet wird, eine unmittelbare Darstellung der Bohrung im Zuge der Datenaufbereitung, Anzeige und auf dieser Anzeige basierender Herstellung eines Zahnersatzteils.

Das mit dem erfindungsgemäßen Scankörper durchgeführte Verfahren arbeitet hierbei wie folgt: Zunächst wird der Scankörper mithilfe des Aufnahmeabschnitts 10 bzw. 110 in ein Implantat eingesetzt bzw. eingeschraubt und im Falle der Verwendung der ersten Ausführungsform mit einer Schraube, die in die Bohrung 20 von koronal eingeführt wird, gesichert.

Hierauf folgend werden die Erfassungsflächen des Scankörpers mit einem Spaltlichtverfahren abgetastet. Im Falle des Scankörpers gemäß der ersten Ausführungsform werden hierzu die von den Kanten in einem definierten Abstand angeordneten Bereiche der Erfassungsflächen (wie der in Fig. 3 dargestellte Bereich 31c der Erfassungsfläche 31) mit dem Abtastverfahren erfasst und darüber hinaus die gekrümmte Erfassungsfläche 40 erfasst. Im Falle der Verwendung der zweiten Ausführungsform des Scankörpers werden die zylindrischen Erfassungsflächen 135, 137 und die dazwischenliegende konische Erfassungsfläche 136 mit dem Spaltlichtverfahren abgetastet.

Die mit diesem Abtastverfahren gewonnenen Daten werden mittels einer Umsetzung in einem Triangulationsverfahren in ein Raum-Körper-Modell des Scankörpers in einer Berechnung umgesetzt und der Scankörper hierdurch durch eine Vielzahl von dreieckigen Flächensegmenten abgebildet.

Des Weiteren kann die kreisförmige Stirnfläche 170 als dritte Erfassungsfläche des Scankörpers der zweiten Ausführungsform abgetastet werden, wenn dies erforderlich ist.

Die solcherart aus den Abtastdaten rekonstruierten Bilddaten können unmittelbar in eine digitale Darstellung des Mundraums eingeblendet werden, um im Falle der Verwendung des Scankörpers gemäß der zweiten Ausführungsform die Lage der Bohrung im Zahnaufbauteil dem Benutzer darzustellen und eine Überprüfung zu ermöglichen, ob rund um diese Bohrung genug Platz zur Verfügung steht, um ein Zahnaufbauteil mit ausreichender Materialstärke platzieren zu können.

Bei Verwendung des Zahnaufbauteils der ersten Ausführungsform wird anhand der im Triangulationsverfahren definierten abgetasteten Flächenbereiche der Erfassungsflächen 31, 32 und 40 die genaue Lage des Scankörpers im Mundraum ermittelt und aus dieser genauen Lage kann dann aufgrund der bekannten Geometrie des Scankörpers auf die exakte Lage, Ausrichtung und den Implantationsort des Implantats geschlossen werden. Aufgrund dieser solcherart berechneten Lage kann dann wiederum bei bekannter Geometrie eines Zahnaufbauteils und dessen Anschlussschnittstelle zum Implantat die Lage des Zahnaufbauteils berechnet und in eine entsprechende dreidimensionale Bilddarstellung virtuell eingeblendet werden, um die Überprüfung der Lage zu erlauben.

## Patentansprüche

1. Erfassungshilfskörper zur geometrischen Erfassung der Implantationslage und des Implantationsortes eines Zahnimplantats, umfassend:
- einen Aufnahmeabschnitt (10), mittels dem der Erfassungskörper einem Zahnimplantat in geometrisch definierter Weise zugeordnet werden kann,
- einen mit dem Aufnahmeabschnitt verbundenen Erfassungsabschnitt (30), welcher ausgebildet ist, um von einer berührungslosen Bilderfassungsvorrichtung erfasst zu werden,
- wobei der Erfassungsabschnitt sich ausgehend vom Aufnahmeabschnitt in einer Erstreckungsrichtung (100) erstreckt, eine erste plane Erfassungsfläche (31) aufweist, deren Flächennormale senkrecht zur Erstreckungsrichtung des Erfassungsabschnitts liegt und eine gekrümmte Erfassungsfläche (40) aufweist,
- wobei der Erfassungsabschnitt (30) als zylindrischer Grundkörper ausgebildet ist, dessen Mittellängsachse (100) der Erstreckungsrichtung des Erfassungsabschnitts entspricht und in dessen Außenfläche die erste plane Erfassungsfläche (31) als sich im Querschnitt als Sekante darstellende Fläche ausgebildet ist und an deren stirnseitigem Ende eine zweite Erfassungsfläche ausgebildet ist,
**dadurch gekennzeichnet, dass**
- der Erfassungsabschnitt eine zweite plane Erfassungsfläche (32) aufweist, deren Flächennormale senkrecht zur Erstreckungsrichtung des Erfassungsabschnitts liegt und die in Bezug auf einen Querschnitt senkrecht zur Erstreckungsrichtung des Erfassungsabschnitts in einem anderen Winkelbereich um die Erstreckungsachse des Erfassungsabschnitts als die erste plane Erfassungsfläche angeordnet ist, und
- sich durch den Erfassungsabschnitt und den Aufnahmeabschnitt ein Kanal (20) zur Aufnahme einer Schraube zur Befestigung des Erfassungshilfskörper an einem Implantat erstreckt, wobei der Kanal mit einem als Widerlager für einen Schraubenkopf dienenden Absatz ausgebildet ist.

2. Erfassungshilfskörper nach Anspruch 1,
**dadurch gekennzeichnet, dass** der Aufnahmeabschnitt (10) als nicht-zylindrische Fläche ausgebildet ist, insbesondere als Mehrkantfläche.

3. Erfassungshilfskörper nach Anspruch 1 oder 2,
**dadurch gekennzeichnet, dass** die gekrümmte Erfassungsfläche als verrundete Übergangsfläche zwischen zumindest einem Umfangsabschnitt eines zylindrischen Außenflächenanteils und eines stirnseitigen Endes ausgebildet ist, das an dem dem Aufnahmeabschnitt gegenüberliegenden Ende des Erfassungshilfskörpers liegt, .

4. Erfassungshilfskörper nach einem der vorhergehenden Ansprüche,
**dadurch gekennzeichnet, dass** die zweite plane Erfassungsfläche (32) rotationssymmetrisch gegenüberliegend zur ersten planen Erfassungsfläche (31) angeordnet ist.

5. Erfassungshilfskörper nach einem der vorhergehenden Ansprüche,
**gekennzeichnet durch**
- einen als Mehrkantfläche, insbesondere als Sechskantfläche (10) ausgebildeteten Aufnahmeabschnitt,
- an den sich nach koronal ein um eine Mittellängsachse (100) rotationssymmetrischer, sich konisch erweiternder Abschnitt anschließt,
- an den sich nach koronal ein um die Mittellängsachse rotationssymmetrischer zylindrischer Abschnitt anschließt,
∘ in dem, beabstandet vom Übergang zwischen dem konischen und dem zylindrischen Abschnitt die erste (31) und eine zweite (32) plane Erfassungsfläche ausgebildet sind,
∘ die gegenüberliegend und parallel zueinander angeordnet sind und
∘ deren Flächennormale senkrecht zur Mittellängsachse liegt,
∘ wobei die erste und zweite Erfassungsfläche in ihrem nach apikal weisenden Endbereich in verrundeter Weise in den zylindrischen Abschnitt übergehen,
- und eine als ringförmiger Abschnitt am koronalen Ende ausgebildete gekrümmte Erfassungsfläche (40), die eine Öffnung zur Einführung einer Schraube zur Befestigung des Erfassungshilfskörper an einem Implantat umringt und die als verrundete Übergangsfläche zwischen dem zylindrischen Abschnitt und dem koronalen Ende ausgebildet ist.

6. Kombination aus einem Erfassungshilfskörper nach einem der vorhergehenden Ansprüche und einem Zahnaufbauteil, das einen Schraubenaufnahmekanal aufweist, in dem eine Schraube zur Befestigung des Aufbauteils an einem Implantat angeordnet werden kann,
**dadurch gekennzeichnet, dass** der Erfassungsabschnitt des Erfassungshilfskörpers eine Außenkontur aufweist, welche zumindest teilweise, vorzugsweise vollständig der Innengeometrie des Schraubenaufnahmekanal des Zahnaufbauteils entspricht.

7. Kombination nach Anspruch 6,
**dadurch gekennzeichnet, dass** der Aufnahmeabschnitt als Außengewinde ausgebildet ist.

8. Kombination nach Anspruch 6 oder 7,
**dadurch gekennzeichnet, dass** zwischen Aufnahmeabschnitt und Erfassungsabschnitt ein nicht rotationssymmetrischer Verdrehsicherungsbereich angeordnet ist..

9. Verfahren zur Erfassung der Lage und des Ortes eines Zahnimplantats, mit den Schritten:
- Befestigen eines Erfassungshilfskörpers in definierter Lage an dem Zahnimplantat,
- Erfassen der Lage und des Ortes des Erfassungshilfskörpers mit einem Abtastverfahren, insbesondere einem Spaltlichtabtastverfahren,
**dadurch gekennzeichnet, dass** beim Befestigen des Erfassungshilfskörpers an dem Zahnimplantat ein an dem Kanal ausgebildeter Absatz als Widerlager für einen Schraubenkopf dient und dass die Lage und der Ort des Erfassungshilfskörpers erfasst wird, indem
- ein Bereich einer ersten, planen Erfassungsfläche, die als sich im Querschnitt als Sekante darstellende Fläche am Erfassungsabschnitt ausgebildet ist
- ein Bereich einer gekrümmten Erfassungsfläche abgetastet wird, und
- ein Bereich einer zweiten, planen Erfassungsfläche abgetastet wird, deren Flächennormale senkrecht zur Mittellängsachse des Erfassungshilfskörpers liegt und die in Bezug auf einen Querschnitt senkrecht zur Erstreckungsrichtung des Erfassungsabschnitts in einem anderen Winkelbereich um die Erstreckungsachse des Erfassungsabschnitts als die erste plane Erfassungsfläche angeordnet ist.

10. Verfahren nach Anspruch 9,
**dadurch gekennzeichnet, dass** als gekrümmte Erfassungsfläche eine ringförmig am koronalen Ende des Erfassungshilfskörpers ausgebildete verrundete Fläche abgetastet wird.

11. Verfahren nach einem der vorhergehenden Ansprüche 9-10,
**dadurch gekennzeichnet, dass** die zweite, plane Erfassungsfläche gegenüberliegend zur ersten Erfassungsfläche angeordnet ist.

12. Verfahren nach einem der vorhergehenden Ansprüche 9-11,
**dadurch gekennzeichnet, dass** ein Bereich der ersten, und gegebenenfalls der zweiten planen Erfassungsfläche abgetastet wird, der allseitig zu den Umrisskanten der ersten bzw. zweiten planen Erfassungsfläche einen vorbestimmten Abstand aufweist.

13. Verfahren nach einem der vorhergehenden Ansprüche 9-12,
**dadurch gekennzeichnet, dass** eine Erfassungsfläche abgetastet wird, deren Außengeometrie teilweise, vorzugsweise vollständig der Innengeometrie einer Bohrung eines Aufbauteils entspricht, durch welche eine Schraube zur Befestigung des Aufbauteils an einem Implantat geführt ist.

## Claims

1. Detection auxiliary body for the geometric detection of the implantation position and the implantation site of a tooth implant, comprising:
- a receiving section (10) by means of which the detection body can be assigned to a tooth implant in a geometrically defined manner,
- a detection section (30) connected to the receiving section which is designed to be detected by a contactless image detection device,
- wherein the detection section extends proceeding from the receiving section in an extension direction (100), has a first flat detection surface (31), whose surface normal is perpendicular to the extension direction of the detection section and has a curved detection surface (40),
- wherein the detection section (30) is designed as a cylindrical base body, whose central longitudinal axis (100) corresponds to the extension direction of the detection section and in whose outer surface the first flat detection surface (31) is designed as a surface represented as a secant in its cross-section and on whose front side end is designed a second detection surface,
**characterised in that**
- the detection section has a second flat detection surface (32), whose surface normal is perpendicular to the extension direction of the detection section and which is arranged in relation to a cross-section perpendicular to the extension direction of the detection section in a different angular range about the extension axis of the detection section than the first flat detection surface, and
- a channel (20) for receiving a screw to fasten the detection auxiliary body on an implant extends through the detection section and the receiving section, wherein the channel is designed with a recess serving as a counter bearing for a screw head.

2. Detection auxiliary body according to claim 1,
**characterised in that** the receiving section (10) is designed as a non-cylindrical surface, in particular a polygonal surface.

3. Detection auxiliary body according to claim 1 or 2,
**characterised in that** the curved detection surface is designed as a rounded transition surface between at least one circumferential section of a cylindrical outer surface portion and a front side end which is located at the end of the detection auxiliary body opposed to the receiving section.

4. Detection auxiliary body according to any one of the preceding claims, **characterised in that** the second flat detection surface (32) is arranged rotationally-symmetrically opposite the first flat detection surface (31).

5. Detection auxiliary body according to any one of the preceding claims, **characterised by**
- a receiving section designed as a polygonal surface, in particular a hexagonal surface (10),
- to which adjoins in a coronal direction a conically extending section, which is rotationally-symmetric about a central longitudinal axis (100),
- to which adjoins in a coronal direction a cylindrical section rotationally-symmetric about the central longitudinal axis,
∘ in which, spaced apart from the transition between the conical and the cylindrical section, the first (31) and a second (32) flat detection surface are designed,
∘ which are arranged opposite and parallel to one another and
∘ whose surface normal is perpendicular to the central longitudinal axis,
∘ wherein the first and second detection surface merge into the cylindrical section in a rounded manner in their end region pointing in an apical direction,
- and a curved detection surface (40) designed as a ring-shaped section on the coronal end, which surrounds an opening for inserting a screw to fasten the detection auxiliary body on an implant and which is designed as a rounded transition surface between the cylindrical section and the coronal end.

6. Combination of a detection auxiliary body according to any one of the preceding claims, and a tooth abutment, which has a screw receiving channel in which a screw can be arranged for fastening the abutment to an implant,
**characterised in that** the detection section of the detection auxiliary body has an outer contour, which at least partially, preferably completely corresponds to the inner geometry of the screw receiving channel of the tooth abutment.

7. Combination according to claim 6,
**characterised in that** the receiving section is designed as an outer thread.

8. Combination according to claim 6 or 7,
**characterised in that** a non-rotationally-symmetric torsion-proof region is arranged between the receiving section and the detection section.

9. Method of detecting the position and the site of a tooth implant, with the steps:
- fastening a detection auxiliary body in a defined position on the tooth implant,
- detecting the position and the site of the detection auxiliary body with a scanning method, in particular a slit light scanning method,
**characterised in that** when the detection auxiliary body is fastened on the tooth implant a recess designed on the channel serves as the counter bearing for a screw head and **in that** the position and the site of the detection auxiliary body is detected by
- a region of a first flat detection surface, which is designed on the detection section as a surface represented as a secant in its cross-section,
- a region of a curved detection surface being scanned and
- a region of a second flat detection surface being scanned, whose surface normal is perpendicular to the central longitudinal axis of the detection auxiliary body and which is arranged in relation to a cross-section perpendicular to the extension direction of the detection section in a different angular range about the extension axis of the detection section than the first flat detection surface.

10. Method according to claim 9,
**characterised in that** as the curved detection surface a rounded surface designed in a ring shape on the coronal end of the detection auxiliary body is scanned.

11. Method according to any one of the preceding claims 9 to 10,
**characterised in that** the second flat detection surface is arranged opposite the first detection surface.

12. Method according to any one of the preceding claims 9 to 11,
**characterised in that** a region of the first and optionally of the second flat detection surface is scanned, which has a predetermined distance on all sides to the outline edges of the first or second flat detection surface.

13. Method according to any one of the preceding claims 9 to 12,
**characterised in that** a detection surface is scanned, whose outer geometry corresponds partially, preferably completely to the inner geometry of a borehole of an abutment, through which a screw is guided to fasten the abutment on an implant.

## Revendications

1. Corps auxiliaire de détection pour la détection géométrique de la position d'implantation et du lieu d'implantation d'un implant dentaire, comprenant :
- une section de réception (10), au moyen de laquelle le corps de détection peut être affecté à un implant dentaire de manière géométriquement définie,
- une section de détection (30) reliée à la section de réception, laquelle est réalisée pour être détectée par un dispositif de détection d'image sans contact,
- dans lequel la section de détection s'étend à partir de la section de réception dans une direction d'extension (100), présente une première surface de détection plane (31), dont la normale à la surface se trouve perpendiculairement à la direction d'extension de la section de détection et présente une surface de détection incurvée (40),
- dans lequel la section de détection (30) est réalisée en tant que corps de base cylindrique, dont l'axe longitudinal médian (100) correspond à la direction d'extension de la section de détection et dans laquelle surface extérieure, la première surface de détection plane (31) est réalisée en tant que surface représentant une sécante dans la section transversale et au niveau de l'extrémité côté frontal de laquelle une deuxième surface de détection est réalisée,
**caractérisé en ce que**
- la section de détection présente une deuxième surface de détection plane (32), dont la normale à la surface se trouve perpendiculairement à la direction d'extension de la section de détection et qui est agencée par rapport à une section transversale perpendiculairement à la direction d'extension de la section de détection dans une autre plage angulaire autour de l'axe d'extension de la section de détection que la première surface de détection plane, et
- un canal (20) pour la réception d'une vis pour la fixation du corps auxiliaire de détection au niveau d'un implant s'étend à travers la section de détection et la section de réception, dans lequel le canal est réalisé avec un épaulement servant de butée pour une tête de vis.

2. Corps auxiliaire de détection selon la revendication 1,
**caractérisé en ce que** la section de réception (10) est réalisée en tant que surface non cylindrique, en particulier en tant que surface polygonale.

3. Corps auxiliaire de détection selon la revendication 1 ou 2,
**caractérisé en ce que** la surface de détection incurvée est réalisée en tant que surface de transition arrondie entre au moins une section circonférentielle d'une part de surface extérieure cylindrique et d'une extrémité côté frontal, qui se trouve au niveau de l'extrémité du corps auxiliaire de détection opposée à la section de réception.

4. Corps auxiliaire de détection selon l'une quelconque des revendications précédentes,
**caractérisé en ce que** la deuxième surface de détection plane (32) est agencée en symétrie de rotation à l'opposé de la première surface de détection plane (31).

5. Corps auxiliaire de détection selon l'une quelconque des revendications précédentes,
**caractérisé par**
- une section de réception réalisée en tant que surface polygonale, en particulier en tant que surface hexagonale (10),
- à laquelle se raccorde coronairement une section à symétrie de rotation autour d'un axe longitudinal médian (100), s'élargissant de manière conique,
- à laquelle se raccorde coronairement une section cylindrique à symétrie de rotation autour de l'axe longitudinal médian,
∘ dans laquelle, à distance de la transition entre la section conique et la section cylindrique, la première (31) et une deuxième (32) surface de détection plane sont réalisées,
∘ qui sont agencées à l'opposé et parallèlement l'une à l'autre et
∘ dont la normale à la surface se trouve perpendiculairement à l'axe longitudinal médian,
∘ dans lequel la première et deuxième surface de détection passent dans leur zone d'extrémité dirigée apicalement de manière arrondie dans la section cylindrique,
- et une surface de détection (40) incurvée réalisée au niveau de l'extrémité coronaire en tant que section annulaire, qui entoure une ouverture pour l'introduction d'une vis pour la fixation du corps auxiliaire de détection au niveau d'un implant et qui est réalisée en tant que surface de transition arrondie entre la section cylindrique et l'extrémité coronaire.

6. Combinaison d'un corps auxiliaire de détection selon l'une quelconque des revendications précédentes et une pièce rapportée de dent, qui présente un canal de réception de vis, dans lequel une vis peut être agencée pour la fixation de la pièce rapportée au niveau d'un implant,
**caractérisée en ce que** la section de détection du corps auxiliaire de détection présente un contour extérieur, lequel correspond au moins en partie, de préférence complètement à la géométrie intérieure du canal de réception de vis de la pièce rapportée de dent.

7. Combinaison selon la revendication 6,
**caractérisée en ce que** la section de réception est réalisée en tant que filet extérieur.

8. Combinaison selon la revendication 6 ou 7,
**caractérisée en ce qu'**une zone anti-rotation sans symétrie de rotation est agencée entre la section de réception et la section de détection.

9. Procédé de détection de la position et du lieu d'un implant dentaire, avec les étapes de :
- fixation d'un corps auxiliaire de détection dans une position définie au niveau de l'implant dentaire,
- détection de la position et du lieu du corps auxiliaire de détection avec un procédé de balayage, en particulier un procédé de balayage par lumière interstitielle,
**caractérisée en ce que** lors de la fixation du corps auxiliaire de détection au niveau de l'implant dentaire, un épaulement réalisé au niveau du canal sert de butée pour une tête de vis et que la position et le lieu du corps auxiliaire de détection sont détectés, par le fait que
- une zone d'une première surface de détection plane, qui est réalisée en tant que surface représentant une sécante dans la section transversale au niveau de la section de détection
- une zone d'une surface de détection incurvée est balayée, et
- une zone d'une deuxième surface de détection plane est balayée, dont la normale à la surface se trouve perpendiculairement à l'axe longitudinal médian du corps auxiliaire de détection et qui est agencée par rapport à une section transversale perpendiculairement à la direction d'extension de la section de détection dans une autre plage angulaire autour de l'axe d'extension de la section de détection en tant que la première surface de détection.

10. Procédé selon la revendication 9,
**caractérisé en ce qu'**une surface arrondie réalisée de manière annulaire au niveau de l'extrémité coronaire du corps auxiliaire de détection est balayée en tant que surface de détection incurvée.

11. Procédé selon l'une quelconque des revendications précédentes 9 à 10,
**caractérisé en ce que** la deuxième surface de détection plane est agencée à l'opposé de la première surface de détection.

12. Procédé selon l'une quelconque des revendications précédentes 9 à 11,
**caractérisé en ce qu'**une zone de la première, et le cas échéant de la deuxième surface de détection plane est balayée, qui présente de tous les côtés par rapport aux arêtes de pourtour de la première ou deuxième surface de détection plane une distance prédéterminée.

13. Procédé selon l'une quelconque des revendications précédentes 9 à 12,
**caractérisé en ce qu'**une surface de détection est balayée, dont la géométrie extérieure correspond en partie, de préférence complètement à la géométrie intérieure d'un perçage d'une pièce rapportée, à travers lequel une vis est guidée pour la fixation de la pièce rapportée au niveau d'un implant.
